# EUROPÄISCHE PATENTSCHRIFT

(11) **EP 2 218 565 B1**
(45) Veröffentlichungstag und Bekanntmachung des Hinweises auf die Patenterteilung: **06.06.2012**
(21) Anmeldenummer: 10005119.2
(22) Anmeldetag: 08.02.2008
(51) Int. Cl.: B02C 18/08, B02C 18/12, B02C 23/26, B01F 7/16, B01F 13/10, B01F 15/02, B29B 17/00, B29B 7/16, B29B 13/10, B29B 17/04

(54) **Verfahren und Vorrichtung zur Aufbereitung eines Materials**
Process and apparatus for treatment of a material
Procédé et dispositif pour la préparation d'un matériau

(30) Priorität: 15.02.2007 AT 2442007
(43) Veröffentlichungstag der Anmeldung: 18.08.2010
(62) Teilanmeldung aus: 08706015.8
(73) Patentinhaber: EREMA Engineering Recycling Maschinen und Anlagen Gesellschaft m.b.H., 4052 Ansfelden (AT)
(72) Erfinder: Weigerstorfer, Georg, 4030 Linz/Ebelsberg (AT); Feichtinger, Klaus, Dipl.-Ing., 4040 Linz (AT); Pauli, Peter, 4511 Allhaming (AT)
(74) Vertreter: Wildhack, Andreas

(56) Entgegenhaltungen:
- WO-A-2005/087474
- DE-A1- 2 432 494
- DE-A1- 2 609 850
- DE-A1- 3 705 343
- DE-A1- 4 205 073

## Beschreibung

Die Erfindung bezieht sich auf ein Verfahren gemäß dem Oberbegriff des Anspruchs 1 sowie eine Vorrichtung gemäß dem Oberbegriff des Anspruchs 4.

Zahlreiche Kunststoff-Recycling-Anwendungen leiden unter problematischen Beschickungseinflüssen wie hoher Restfeuchte, großen Dichteschwankungen, zu großen Aufgabeportionen etc. Dadurch werden die Performance des nachgeschalteten Extruders bzw. die Wirtschaftlichkeit des Verfahrens negativ beeinflusst. Der Extruder leidet unter diesen Beschickungseinflüssen, was zu reduzierter und schwankender Ausstoßleistung, ungleichmäßiger Aufschmelzleistung, reduzierter Produktqualität, gegebenenfalls erhöhtem Verschleiß und insgesamt zu einer reduzierten Produktivität führt.

Aus dem Stand der Technik, z. B. aus der WO 00/74912 A1, sind Vorrichtungen mit zwei übereinander angeordneten Mischwerkzeugen im Schneidverdichter bekannt, die diese Probleme verringern.

Die Zone, wo vorwiegend die Zerkleinerung bzw. Trocknung bzw. Vorwärmung des Materiales erfolgt, ist getrennt von der Zone, in der das Material in das Schneckengehäuse eingedrückt wird. Hierbei stellt sich nach einer kurzen Betriebszeit ein Gleichgewicht zwischen dem von der Schnecke unter der Trägerscheibe abgezogenen Materialvolumen und dem durch den Ringspalt von oben nach unten in den Raum unter der Trägerscheibe eintretenden Materialstrom ein. Dies hat zur Folge, dass der im wesentlichen mit von der Schnecke abzutransportierendem Material gefüllte Raum unterhalb der Trägerscheibe dem Abzug des Materiales, welches in Form einer Mischtrombe im Aufnahmebehälter umläuft, einen gewissen Widerstand entgegensetzt, sodass - wenn überhaupt - nur ein verschwindend geringer Anteil des frisch in den Aufnahmebehälter eingebrachten Materiales gleich nach unten in den Bereich unter der umlaufenden Trägerscheibe gelangen kann.

Dies trägt dazu bei, eine ausreichende Verweilzeit des Materiales im Aufnahmebehälter, insbesondere in dessen Bereich oberhalb der Trägerscheibe, sicherzustellen. Damit wird die Temperatur des in die Austragöffnung des Aufnahmebehälters eingebrachten Materiales vergleichmäßigt, da im wesentlichen alle im Behälter befindlichen Kunststoffteile ausreichend vorbearbeitet werden. Die annähernd konstante Temperatur des ins Schneckengehäuse eintretenden Materials hat zur Folge, dass inhomogene Kunststoffnester bzw. -bereiche im Gehäuse der Extruderschnecke weitgehend eliminiert werden und dadurch die Schneckenlänge geringer gehalten werden kann als bei den bekannten Konstruktionen, da die Schnecke weniger Arbeit aufbringen muss, um das Kunststoffmaterial mit Sicherheit auf gleiche Plastifiziertemperatur zu bringen. Die konstante Eintrittstemperatur des Kunststoffmateriales in das Schneckengehäuse hat weiters eine gleichmäßige Vorverdichtung des Materiales im Schneckengehäuse zur Folge, was sich auf die Verhältnisse an der Extruderöffnung günstig auswirkt, insbesondere in Form eines gleichmäßigen Extruderdurchsatzes und einer gleichmäßigen Materialqualität am Extruderausgang. Die verkürzte Schneckenlänge ergibt eine Energieeinsparung und eine im Vergleich zu anderen Konstruktionen erniedrigte Verarbeitungstemperatur im Extruder, da ja die durchschnittliche Temperatur, mit welcher das Material in das Schneckengehäuse eintritt, gleichmäßiger ist als bei diesen anderen Konstruktionen. Beim derartigen Vorrichtungen muss somit das bearbeitete Kunststoffmaterial - gesehen über den gesamten Bearbeitungsvorgang - auf eine im Vergleich zu den bekannten Konstruktionen weniger hohe Temperatur gebracht werden, um die Sicherheit einer ausreichenden Plastifizierung zu haben. Dieser Abbau der Spitzentemperaturen hat die eingangs erwähnte Energieeinsparung zur Folge und weiters die Vermeidung einer thermischen Schädigung des zu verarbeitenden Materiales.

Durch die Anordnung von zwei übereinander angeordneten Mischwerkzeugen im Schneidverdichter und der Ausbildung von zwei aufeinanderfolgenden Behandlungsstufen erfolgt somit auf einfache Weise eine Trennung des Arbeitsschrittes der "Materialvorbereitung", d.h. des Zerkleinerns, Trocknens, Vorwärmens, Verdichtens und Mischens vom Arbeitschritt der "Beschickung des Extruders". Durch die Entkoppelung der beiden Arbeitsschritte werden negative Beschickungseinflüsse, wie oben beschrieben, vom Extruder und dessen sensibler Beschickungs- bzw. Einzugszone weitgehend ferngehalten. Das Resultat ist ein sehr gleichmäßig beschickter und sehr gleichmäßig laufender Extruder, welcher unabhängig von Beschickungseinflüssen konstant bis zu 15% Mehrleistung erbringen kann. Weiters sind größere Aufgabeportionen verarbeitbar, eine höhere Restfeuchte im Aufgabegut ist zulässig, eine höhere Durchsatzleistung ist erzielbar, das Material hat eine niedrigere Schmelzetemperatur und es kommt zu Energiekosteneinsparungen bei höherer Granulatqualität.

Derartige Vorrichtungen haben sich für die Aufbereitung, insbesondere thermoplastischen, Kunststoffmateriales sehr bewährt, jedoch hat es sich herausgestellt, dass es mitunter zur Einsperrung flüchtiger, aus dem bearbeiteten Material abgegebener Stoffe im Raum unter der oberen Trägerscheibe kommt. Nicht immer können diese flüchtigen Substanzen durch den zwischen dem Rand der Trägerscheibe und der Innenwand des Aufnahmebehälters bestehenden Ringspalt nach oben entweichen, zumal ja durch diesen Ringspalt das zu bearbeitende Material von oben nach unten durchtritt. Besonders unangenehm ist es, wenn die flüchtigen Stoffe mit dem bearbeiteten Material aus dem Aufnahmebehälter abtransportiert werden und in den direkt oder indirekt an den Aufnahmebehälter angeschlossenen Extruder gelangen, da dann die Gefahr besteht, dass im extrudierten Material Gaseinschlüsse unterschiedlicher Art vorhanden sind, was die Qualität des am Extruderausgang erhaltenen Materials wesentlich herabsetzt. Diese Gefahr kann auch durch eine zumeist im Extruder vorgesehene Entgasungseinrichtung nicht völlig beseitigt werden. Zudem sind solche flüchtige Substanzen bzw. Störstoffe zumeist nicht von vornherein zu vermeiden, denn es handelt sich um Wasserdampf, Abspaltprodukte des zu bearbeitenden Materials, gasförmige oder verdampfte Kühlmittelanteile usw.. Insbesondere bei in den Aufnahmebehälter eingebrachtem feuchtem Kunststoffmaterial können diese flüchtigen Substanzanteile erheblich sein.

Um diese Nachteile zu vermeiden und das durch die Austragsöffnung des Aufnahmebehälters abgeführte Material mit geringem Aufwand zumindest im wesentlichen frei von den erwähnten flüchtigen Substanzen zu machen, kann vorgesehen werden, dass die Trägerscheibe zumindest einen, insbesondere nahe der Achse und nahe den beim Umlauf der Trägerscheibe nachlaufenden Rändern der Werkzeuge angeordneten, Durchbruch aufweist, welcher den Raum ober ihr mit dem Raum unter ihr verbindet. Durch diesen Durchbruch können die im Raum unter der Trägerscheibe befindlichen oder dort erst entstehenden flüchtigen Stoffe nach oben durch die Trägerscheibe hindurch in den Raum ober ihr entweichen, wo sie unschädlich sind und von wo sie gegebenenfalls entweichen können. Hierbei hat es sich durch Versuche ergeben, dass nahe der Achse angeordnete Durchbrüche besser wirksam sind als achsfern angeordnete Durchbrüche. Die nahe den beim Umlauf der Trägerscheibe nachlaufenden Ränder der Werkzeuge angeordneten Durchbrüche nützen die von den umlaufenden Werkzeugen hervorgerufene Saugwirkung dazu aus, die erwähnten flüchtigen Substanzen aus dem Raum unter der Trägerscheibe abzusaugen.

Trotzdem sind derartige Vorrichtungen zumeist nicht imstande, sämtliche Störsubstanzen restlos zu entfernen, was eine Beeinträchtigung der Aufbereitung bzw. Verarbeitung zur Folge hat.

Als Störsubstanzen sind grundsätzlich alle Stoffe anzusehen, die aus dem zu behandelnden Material austreten bzw. sich von dem eingebrachten Material lösen bzw. eventuell sogar gemeinsam mit dem Material eingebracht werden und die eine spätere Beeinträchtigung der Verarbeitung nach sich ziehen können. Die Störstoffe können außen an den Oberflächen des aufzubereitenden Materials anhaften, wie dies insbesondere bei Waschwasser, Oberflächenbeschichtungen etc. der Fall ist und dann dort verdunsten, sublimieren, sich von der Oberfläche lösen od. dgl.. Die Störstoffe können aber auch in der Matrix des Materials bzw. im Inneren des Materials vorliegen und dann im Zuge der Bearbeitung nach außen diffundieren und dort verdunsten, sublimieren od. dgl.. Dies ist insbesondere bei organischen Zusatzstoffen, beispielsweise bei Weichmachern, zu beachten, aber auch Wasser, Monomere, Gase oder Wachse können in der Matrix vorliegen. Es kann sich bei den zu entfernenden Störstoffen somit auch um sublimierende Feststoffe oder um Staub handeln.

Probleme gibt es insbesondere bei Kunststoffmaterialien mit hoher externer Feuchtigkeit, wie beispielsweise Polyolefinwaschschnitzel etc.. Auch Materialien mit hoher interner Feuchtigkeit, beispielsweise PA-Fasern, sind problematisch. Zwischen den Scheiben bzw. Mischwerkzeugen kann es dann beispielsweise durch die mit Feuchtigkeit gesättigte Luft, zu Kondensation und Verdampfung kommen, was wiederum, neben den weiteren erwähnten Nachteilen zu einem erhöhten Energiebedarf des Systems führt.

Aus dem Stand der Technik sind Vorrichtungen bekannt, mit denen über Absaugvorrichtungen z.B. Wasserdampf, der sich über dem zu bearbeitenden Material gebildet hat, abgesaugt werden kann. Allerdings ist ein Aufnahmebehälter, wie er bei oben erwähnten Vorrichtungen eingesetzt wird, in seinem unteren Bereich im wesentlichen gasdicht bzw. ist ein druckausgleichendes Nachströmen von Luft von unten nur schwer möglich, sodass die feuchtigkeitsgesättigte Luft nicht gut abgesaugt werden kann. Bei Vorrichtungen mit mehreren übereinander angeordneten Scheiben bzw. Mischwerkzeugen ist dies mit zusätzlichen Schwierigkeiten verbunden.

Bei der Aufbereitung von Material mit hoher Restfeuchte entsteht durch die große Menge des entstandenen Wasserdampfes von selbst eine gewisse Bewegungsdynamik im Schneidverdichter, die eine Absaugung der feuchten Luft unterstützt. Bei der Aufbereitung von Material mit geringer Restfeuchte ist dies jedoch nicht der Fall, vielmehr sammelt sich die feuchtigkeitsgesättigte Luft in einer zentralen Senke der Mischthrombe knapp über dem Materiallevel. Eine unterstützende Dynamik wird nicht gebildet und die Absaugung bzw. Entfernung dieser feuchten Luft ist wesentlich schwieriger.

Aus dem Stand d. Technik gemäß DE-A-2609850 ist ein Verfahren gemäß dem Oberbegriff des Anspruchs 1 bzw. eine Vorrichtung gemäß dem Oberbegriff des Anspruchs 4 bekannt.

Aufgabe der vorliegenden Erfindung ist es daher, ein Verfahren bzw. eine Vorrichtung zu schaffen, durch das/die es ermöglicht wird, unerwünschte Störstoffe, die die Aufbereitung bzw. weitere Bearbeitung des Materials beeinträchtigen, beispielsweise flüchtige Substanzen, insbesondere Feuchtigkeit bzw. Wasserdampf, aus dem aufzubereitenden Material zu entfernen und das Aufbereitungsverfahren in vorteilhafter Weise zu führen und zu beeinflussen.

Diese Aufgabe wird bei einem Verfahren der eingangs erwähnten Art durch die kennzeichnenden Merkmale des Anspruchs 1 und bei einer Vorrichtung der eingangs erwähnten Art durch die kennzeichnenden Merkmale des Anspruch 4 gelöst.

Dabei ist beim Verfahren erfindungsgemäß vorgesehen, dass das Gas in den Aufnahmebehälter über zumindest ein in einer Seitenwand des Aufnahmebehälters ausgebildetes Gaszufuhrmittel eingebracht wird und zwar im Bereich oberhalb des bodennächsten Mischwerkzeuges.

Bei der Vorrichtung ist erfindungsgemäß vorgesehen, dass das/die Gaszufuhrmittel in der Seitenwand des Aufnahmebehälters angeordnet sind bzw. in der Seitenwand des Aufnahmebehälters in den Aufnahmebehälter einmünden bzw. ausgebildet sind, wobei das/die Gaszufuhrmittel im Bereich oberhalb des bodennächsten bzw. untersten bodennahen Mischwerkzeuges angeordnet sind.

Eine solche Verfahrensführung bzw. Vorrichtung ist insbesondere dann vorteilhaft, wenn die untersten Mischwerkzeuge dicht am Behälterboden befestigt sind und der Abstand zwischen der Unterseite der Mischwerkzeuge und dem Boden des Behälters nur sehr gering ist. In diesem Fall könnte sich eine effektive Zwangsströmung nicht so leicht ausbilden und müsste sich das Gas erst durch den schmalen Spalt durchzwängen.

Durch die erfindungsgemäße Anordnung der Gaszufuhrmittel oberhalb des untersten bodennahen Mischwerkzeuges wird dies verhindert und das Gas kann eine ungehinderte Strömung durch zumindest einen Teilbereich des Materials ausbilden, wodurch die im Material, bei einer Vorrichtung mit zwei übereinanderangeordneten Mischwerkzeugen insbesondere im Bereich zwischen den Scheiben bzw. Mischwerkzeugen, vorhandene Feuchtigkeit bzw. die Störstoffe auf diese Weise effektiv entfernt werden.

Weitere vorteilhafte Ausgestaltungen der Erfindung werden in den abhängigen Ansprüchen beschrieben:
Die Gaszufuhrmittel können als passive Gaszufuhrmittel, beispielsweise als bloße Durchgangsöffnungen, ausgebildet sein, durch die das Gas lediglich passiv, beispielsweise durch Unterdruck im Schneidverdichter ins Innere des Schneidverdichters eingesaugt wird. Die Gaszufuhrmittel können aber auch als aktive Gaszufuhrmittel, beispielsweise als Düsen od. dgl. ausgebildet sein, durch die das Gas beispielsweise mit Pumpen, Gebläsen etc. mit Überdruck aktiv ins Innere des Schneidverdichters eingeblasen, eingedüst oder eingepumpt werden kann.

Ebenso können die Gasabfuhrmittel als passive Gasabfuhrmittel ausgebildet sein, durch die das Gas lediglich durch Überdruck im Aufnahmebehälter forciert, durchtritt oder als beispielsweise über Saugpumpen beaufschlagte, aktive Gasabfuhrmittel.

Vorteilhafterweise wird das Gas, bevor es dem Aufnahmebehälter zugeführt wird, über eine vorgeschaltete Heizeinrichtung oder eine Gastrocknungseinrichtung erwärmt bzw. vorgetrocknet. Auf diese Weise kann die Entfernung der Störstoffe bzw. auch die Verfahrensführung effektiv gesteuert werden.

Zur Regulierung der Gaszufuhr bzw. -abfuhr sind die Gaszufuhr- und/oder abfuhrmittel zumindest teilweise verschließbar bzw. ansteuerbar.

Die Gaszufuhrmittel können als einzelne singuläre Öffnungen ausgebildet sein, die einen Durchmesser zwischen 10 und 300 mm, vorzugsweise zwischen 50 und 90 mm aufweisen.

Auf der dem Inneren des Aufnahmebehälters zugewendeten Seite der Gaszuführmittel, insbesondere stromaufwärts der Drehrichtung des Materials, kann eine Abdeckung bzw. ein Schild vorgesehen sein, um zu verhindern, dass das Material die Gaszufuhrmittel verstopft.

Um die Rotationsbewegung im Inneren des Aufnahmebehälters möglichst nicht zu stören und lokale Überhitzungen zu vermeiden, ist es außerdem vorteilhaft, dass die Gaszuführmittel bündig mit der Innenwand des Behälters abschließen und nicht davon abragen bzw. vorstehen.

Die charakteristische Ausbildung der Gaszufuhrmittel sowie deren Position hat Einfluss auf die Durchströmung des Materials mit dem Gas und somit auf die Entfernung der Störsubstanzen.

Die Gaszufuhrmittel können zusätzlich in der Bodenfläche des Schneidverdichters unterhalb des untersten Bodenmischwerkzeuges ausgebildet sein und dort vorzugsweise innerhalb des innersten Radiusdrittels der Bodenfläche. Wenn die Gaszufuhrmittel in der Bodenfläche ausgebildet sind, kommt es durch die Einblasung des Gases von unten auch zu einer Auflockerung des Sumpfes, wodurch eine noch bessere Aufbereitung des Materials gewährleistet wird.

Die Gaszufuhrmittel können dabei als einzelne singuläre Öffnungen oder in Form einer um die Durchführung der Antriebswelle des Mischwerkzeuges durch die Bodenfläche herum nahezu durchgehend verlaufenden ringschlitzartigen Öffnung ausgebildet sein.

Erfindungsgemäß sind die Gaszufuhrmittel in der Seitenwand des Schneidverdichters angeordnet, wobei darauf zu achten ist, dass die Gaszufuhrmittel ständig unterhalb des Materialniveaus liegen. Vorteilhaft sind Positionen der Gaszufuhrmittel im Bereich des untersten Drittels der Gesamthöhe des Schneidverdichters, insbesondere unterhalb der unteren bzw. untersten bodennahen Mischwerkzeuge.

Bei Vorrichtungen mit mehreren übereinander angeordneten Mischwerkzeugen ist es äußerst vorteilhaft für die Verfahrensführung, wenn die Gaszufuhrmittel zwischen den obersten und den untersten Mischwerkzeugen angeordnet sind bzw. in den dazwischen ausgebildeten Raum einmünden. Auf diese Weise wird das Material gut vom Gas bzw. der Luft durchströmt und die Strömung wirkt mit der Durchmischung durch die Mischwerkzeuge in vorteilhaftervveise zusammen.

Vorteilhafterweise münden die Gaszufuhrmittel nicht im Bereich der Kanten der Trägerscheiben bzw. der Mischwerkzeuge, sondern, insbesondere jeweils, in den Bereich zwischen jeweils zwei Trägerscheiben bzw. Mischwerkzeugen in den Aufnahmebehälter ein bzw. sind dort angeordnet, wobei die Gaszufuhrmittel insbesondere mittig zwischen jeweils zwei Trägerscheiben bzw. Mischwerkzeugen angeordnet sind.

In diesem Zusammenhang ist es besonders vorteilhaft, wenn in der oberen Trägerscheibe Durchbrüche ausgebildet sind, da auf diese Weise die Störsubstanzen effektiv aus dem Bereich zwischen den Mischwerkzeugen entfernt werden können.

Wenn die Gaszufuhrmittel in demjenigen Bereich der Seitenwand des Behälters ausgebildet sind, in dem die rotierenden Materialteilchen den höchsten Druck auf die Seitenwand ausüben, so müssen die Gaszufuhrmittel diesem Druck entgegenwirken und als aktive Gaszufuhrmittel das Gas mit Druck ins Innere des Behälters einblasen.

Auch in der Seitenwand können die Gaszufuhrmittel als einzelne singuläre Öffnungen ausgebildet sein. Sie können aber auch in Form eines sich entlang des Umfanges erstreckenden Ringspaltes ausgebildet sein.

Zusätzlich zu den bisher beschriebenen Anordnungsmöglichkeiten können die Gaszufuhrmittel auch auf zumindest einem der Mischwerkzeuge bzw. auf der Trägerscheibe angeordnet sein. Dabei ist eine Anordnung auf dem unteren, der Bodenfläche nächsten Mischwerkzeug bzw. auf der unteren Trägerscheibe vorteilhaft. Bei der Anordnung der Gaszufuhrmittel auf den Mischwerkzeugen bzw. Trägerscheiben ist es vorteilhaft, die Gaszufuhrmittel auf der der Bodenfläche zugewendeten Seite auszubilden.

Außerdem ist es vorteilhaft, die Gaszufuhrmittel nahe der Achse der Trägerscheibe bzw. der Mischwerkzeuge anzuordnen und vorteilhafterweise nahe den beim Umlauf der Trägerscheibe nachlaufenden Rändern der Werkzeuge bzw. nahe dem Durchbruch. Auf diese Weise kann eine effektive Entfernung der Störstoffe gewährleistet werden.

Gemäß eine bevorzugten Ausführungsform ist es vorteilhaft, an der Unterseite der Trägerscheibe Förderflügel auszubilden, die eine Material- und Gasströmung vom Bereich unterhalb der Trägerscheibe nach oben bewirken. Bei dieser Ausführungsform wirken die Förderflügel somit in vorteilhafter Weise mit den Gaszufuhrmitteln und gegebenenfalls ausgebildeten Durchbrüchen zusammen und gewährleisten auf diese Weise einen effektiven Materialaustrag aus dem Bereich unterhalb der Trägerscheibe und eine vorteilhafte Verfahrensführung.

Um ein Mitreißen von Materialteilchen bzw. Flakes durch eine zu starke Absaugung des Gases zu verhindern ist es vorteilhaft, die Gasabfuhrmittel möglichst weit entfernt vom Materiallevel, insbesondere im Deckel des Aufnahmebehälters anzuordnen.

Weitere Kennzeichen und Vorteile der Erfindung ergeben sich aus der Beschreibung von Ausführungsbeispielen des Erfindungsgegenstandes, welche in der Zeichnung schematisch dargestellt sind.
Fig. 1 zeigt einen Vertikalschnitt durch eine erfindungsgemäße Vorrichtung gemäß einem ersten Ausführungsbeispiel.
Fig. 2 zeigt eine Draufsicht zu Fig. 1, teilweise im Schnitt.
Fig. 3 zeigt axonometrisch die Ausbildung von Abdeckungen für die Durchbrüche.
Fig. 4 zeigt ein weiteres Ausführungsbeispiel im Vertikalschnitt.
Fig. 5 ist eine Draufsicht zu Fig. 4, teilweise im Schnitt.
Fig. 6 zeigt ein Detail im Vertikalschnitt durch die Trägerscheibe.
Fig. 7 zeigt einen Vertikalschnitt durch ein weiteres Ausführungsbeispiel.
Fig. 8 zeigt eine Draufsicht davon.
Fig. 9 zeigt ein weiteres Ausführungsbeispiel im Vertikalschnitt.

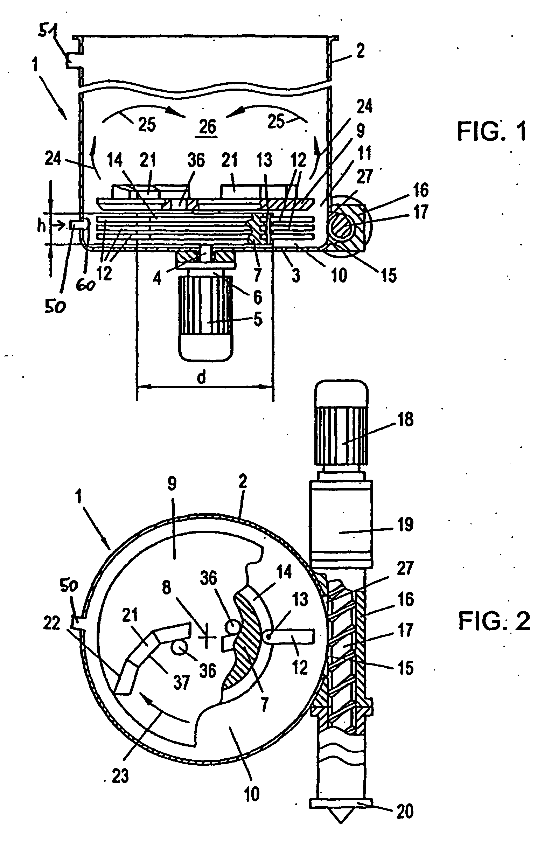

Bei der Ausführungsform nach Fig. 1 und 2 hat die Vorrichtung einen Aufnahmebehälter bzw. Schneidverdichter 1 für das zu verarbeitende, insbesondere thermoplastische, Kunststoffmaterial, das in diesen Behälter 1 von oben mittels einer nicht dargestellten Fördereinrichtung, z.B. eines Förderbandes, eingebracht wird. Das zugeführte Kunststoffmaterial kann vorzerkleinert und/oder vorgetrocknet sein.

Der Aufnahmebehälter 1 ist zylindrisch topfförmig mit vertikalen Seitenwänden 2 und hat einen horizontalen ebenen Boden 3 mit Kreisquerschnitt. Der Aufnahmebehälter 1 kann oben abgeschlossen oder offen sein. Eine Welle 4 durchsetzt, abgedichtet gelagert, den Boden 3 und hat eine vertikale Achse 8, die mit der Behälterachse zusammenfällt. Die Welle 4 ist durch einen unterhalb des Bodens 3 angeordneten Motor 5 mit Getriebe 6 zur Drehbewegung angetrieben. Im Behälter 1 sind mit der Welle 4 ein Rotor 7 und eine darüber angeordnete Trägerscheibe 9 drehschlüssig verbunden. Der Rotor 7 ist von einem kreiszylindrischen Block gebildet, dessen axiale Erstreckung h wesentlich größer ist als jene der flachen Trägerscheibe 9, dessen radiale Erstreckung d jedoch wesentlich kleiner ist als jene der Trägerscheibe 9. Auf diese Weise wird unterhalb der Trägerscheibe 9 ein freier Raum 10 gebildet, der mit dem oberhalb der Trägerscheibe 9 befindlichen Raum 26 des Behälters 1 über einen Ringspalt 11 in freier Strömungsverbindung für das bearbeitete Material steht, der zwischen dem Umfang der Trägerscheibe 9 und der Seitenwand 2 des Behälters 1 besteht. Durch diesen freien Ringspalt 11 kann das behandelte Kunststoffgut aus dem oberen Raum 26 ungehindert in den darunterliegenden ringförmigen Raum 10 gelangen.

Die obere Trägerscheibe 9 trägt an ihrer Oberseite fest angeordnete obere Mischwerkzeuge 21, welche das im Raum 26 des Behälters 1 befindliche Material mischen und/oder zerkleinern und/oder erwärmen. Für eine wirksame Zerkleinerung können die Werkzeuge 21 mit Schneidkanten 22 ausgebildet sein, die entgegen der Umlaufrichtung der Trägerscheibe 9 (Pfeil 23) gekrümmt oder abgewinkelt (Fig. 2) ausgebildet sein können, um einen ziehenden Schnitt zu erreichen.

Im Betrieb ergibt sich beim Umlauf der Trägerscheibe 9 durch den Einfluss der Werkzeuge 21 ein Umlauf der in den Behälter 1 eingebrachten Kunststoffmasse, wobei das bearbeitete Material entlang der Seitenwand 2 des Behälters 1 im Raum 26 hochsteigt (Pfeile 24) und im Bereich der Behälterachse wieder nach unten zurückfällt (Pfeile 25). Die so entstehende Mischtrombe durchwirbelt das eingebrachte Material, sodass ein guter Mischeffekt erzielt wird.

Das in den Behälter 1 eingebrachte, und dort erforderlichenfalls zerkleinerte Materials gelangt durch den Ringspalt 11 allmählich in den unterhalb der Trägerscheibe 9 liegenden Raum 10 und wird dort durch untere, der Bodenfläche 3 nahe Mischwerkzeuge 12 bearbeitet, die am Rotor 7 mittels vertikaler Bolzen 13 in Ringnuten 14 des Rotors 7 schwenkbar befestigt sind, sodass diese Werkzeuge 12 um die Achsen der Bolzen 13 frei pendeln können. Die freien Enden der unteren Werkzeuge 12 liegen im Abstand von der Seitenwand 2 des Behälters 1. Diese unteren Werkzeuge 12 bewirken durch ihre Schlagwirkung eine zusätzliche Mischung und/oder Zerkleinerung und/oder Erwärmung des im Raum 10 befindlichen Materials.

Durch die von diesen unteren bodennahen Werkzeugen 12 auf das Material ausgeübte Fliehkraft wird das Material in eine Austragsöffnung 15 des Behälters 1 befördert, welche in etwa auf der Höhe der zusätzlichen unteren Werkzeuge 12 liegt und den Raum 10 des Behälters 1 mit einer Einzugsöffnung 27 eines Schneckengehäuses 16 verbindet, in welchem eine Schnecke 17 drehbar gelagert ist, die an ihrem einen Stirnende durch einen Motor 18 mit Getriebe 19 zur Drehbewegung angetrieben ist und das ihr zugeführte Kunststoffmaterial am anderen Stirnende, z.B. durch einen Extruderkopf 20, ausdrückt. Es kann sich um eine Einfachschnecke, um eine Doppelschnecke oder um eine Mehrfachschnecke handeln. Wie ersichtlich, ist das Schneckengehäuse 16 annähernd tangential an den Behälter angeschlossen, so dass Umlenkungen des durch die Schnecke 16 plastifizierten Kunststoffmaterials im Bereich seines Austrittes aus dem Gehäuse 16 vermieden werden. Stattdessen kann die Schnecke 17 auch eine reine Förderschnecke sein, welche das im Behälter 1 aufbereitete Material der weiteren Verwendung zuführt, z.B. einem Extruder.

Im Betrieb stellt sich nach einer kurzen Einlaufzeit ein Gleichgewichtszustand zwischen dem von der Schnecke abtransportierten Material und dem durch den Ringspalt 11 von oben in den Raum 10 eintretenden Material ein. Dies hat zur Folge, dass es sehr unwahrscheinlich ist, dass ein in den Behälter 1 eingebrachtes Kunststoffteilchen in das Schneckengehäuse 16 gelangt, ohne zuvor eine ausreichende Verweilzeit im Behälter 1 verbracht zu haben. Dadurch wird eine genügende Bearbeitung aller Kunststoffteilchen durch die Mischwerkzeuge 12, 21 sichergestellt, sodass das von der Schnecke 17 abgeführte Material eine zumindest annähernd gleichmäßige Beschaffenheit aufweist, insbesondere hinsichtlich der Temperatur und der Größe der Kunststoffteilchen. Dies bedeutet, dass die von der Schnecke 17 oder der angeschlossenen Extruderschnecke aufzubringende Plastifizierarbeit vergleichsweise gering ist, sodass hohe thermische Spitzenbeanspruchungen auf das Kunststoffmaterial bei der Plastifizierarbeit entfallen. Dadurch wird das Kunststoffmaterial geschont und an Antriebsenergie für die Schnecke 17 bzw. die Extruderschnecke wesentlich gespart.

Wie erwähnt, ist das in den Behälter 1 eingebrachte Material in der Regel nicht völlig trocken und/oder es weist Verunreinigungen auf, die bei der Verarbeitung im Behälter flüchtige Substanzen abgeben, z.B. Wasserdampf, Abspaltprodukte aus dem bearbeitenden Material, verdampftes Kühlmittel, flüchtige Substanzen aus Einfärbungs- und/oder Bedruckungsmaterial usw.. Um diese Störsubstanzen effektiv zu entfernen bzw. um zu vermeiden, dass diese flüchtigen Substanzen sich im Raum 10 unter der oberen Trägerscheibe 9 ansammeln und dadurch den Durchtritt von bearbeitetem Material aus dem Raum 26 in den Raum 10 behindern und/oder in das Innere des Schneckengehäuses 16 gelangen, hat die Trägerscheibe 9 gemäß Fig. 1 und 2 mindestens einen, vorzugsweise jedoch mehrere Durchbrüche 36, welche den Raum 26 oberhalb der Trägerscheibe 9 mit dem unter ihr befindlichen Raum 10 verbinden. Durch diese Durchbrüche 36 können die im Raum 10 eingesperrten flüchtigen Substanzen durch die Trägerscheibe 9 hindurch nach oben entweichen und so aus dem Behälter 10, beispielsweise durch eine Absaugung 51, abgeführt werden.

Diese Durchbrüche können von in einem Querschnitt kreisförmigen oder geschlitzten Bohrungen gebildet sein. Zumindest einige dieser Durchbrüche 36 sind nahe der Achse 8 des Behälters 1 angeordnet, und zwar unmittelbar hinter den Werkzeugen 21, so dass die Durchbrüche 36, gesehen in Umlaufrichtung (Pfeil 23) der Trägerscheibe 9, den nachlaufenden Rändern 37 bzw. Kanten der Werkzeuge 21 benachbart liegen. Die von den Werkzeugen 21 bei ihrem Umlauf an ihrer nachlaufenden Kante hervorgerufene Saugwirkung unterstützt die Absaugung der flüchtigen Substanzen durch die Durchbrüche 36 nach oben.

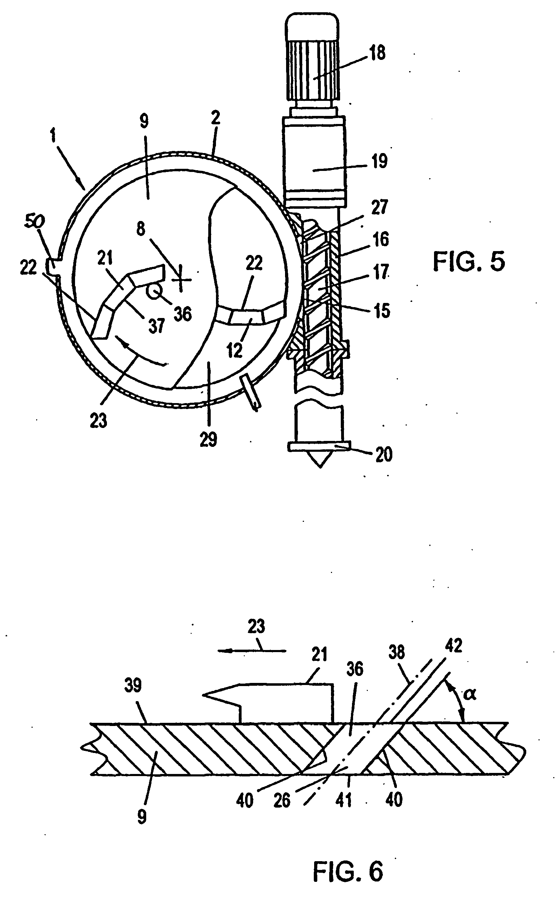

Die Achsen der Durchbrüche 36 können vertikal liegen, es ist jedoch zweckmäßiger, diese Achsen 38 gemäß Fig. 6 schräg anzuordnen, und zwar so, dass sie geneigt sind sowohl zur Ebene der Deckfläche 39 der Trägerscheibe 9 als auch zur Behälterachse 8. Die Neigung der Wände 40 der Durchbrüche (Winkel a, Fig. 6) liegt zweckmäßig zwischen 30 und 60°, vorzugsweise bei etwa 45°. Diese Neigung ist so gewählt, dass das Eintrittsende 41 jedes Durchbruches 36, gesehen in Umlaufrichtung der Trägerscheibe 9 (Pfeil 23) weiter vorne liegt als das Austrittsende 42. Auch diese Maßnahme unterstützt die bereits erwähnte Saugwirkung und wirkt einem direkten Durchfallen des Gutes aus dem Raum 26 durch die Durchbrüche 36 in den Raum 10 entgegen.

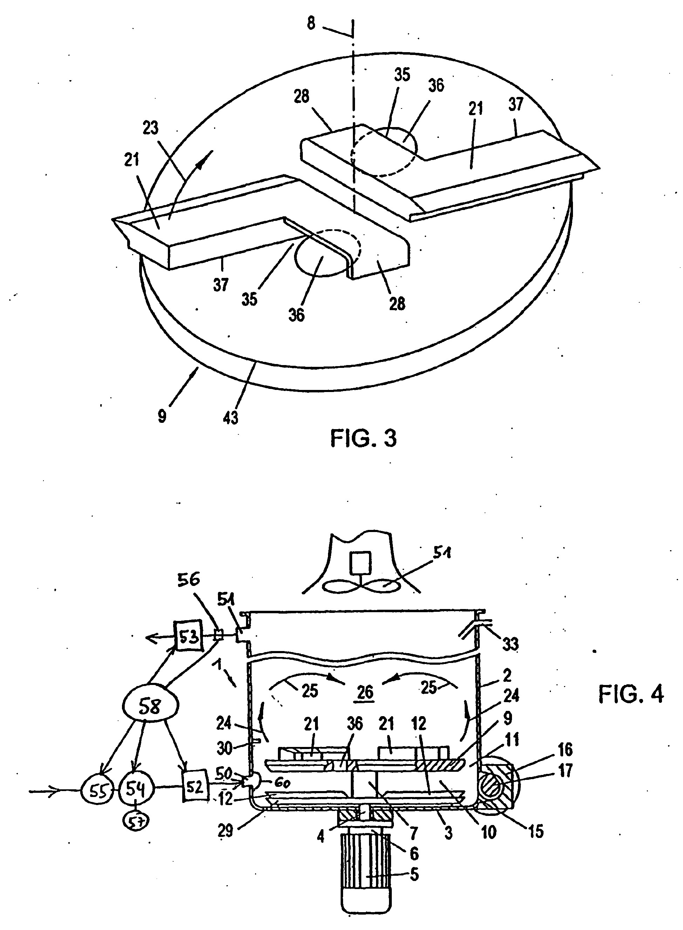

Weiters ist es, wie aus Fig. 3 ersichtlich, zweckmäßig, die Durchbrüche oder zumindest einige derselben mit einer Abdeckung 28 zu versehen, die den Durchbruch 36 rundum abdeckt, bis auf eine nach außen in Richtung zum Umfang 43 der Trägerscheibe 9 gerichtete bzw. radial (in Bezug auf die Achse 8) gerichtete Öffnung 35.

Die Größe, d.h. die Querschnittsfläche der Durchbrüche 36, hängt von der Menge der abzuführenden flüchtigen Stoffe ab. In der Regel ist es ausreichend, die Querschnittsfläche aller Durchbrüche 36 maximal so groß zu bemessen, wie die Querschnittsfläche aller Schnecken bzw. Schneckengehäuse des mit der Austragsöffnung 15 des Behälters 1 in Strömungsverbindung stehenden Extruders bzw. der Schnecken 17.

Im unteren Bereich der Seitenwand 2 des Aufnahmebehälters 1 ist ein Gaszufuhrmittel 50, angeordnet bzw. mündet in der Seitenwand 2 des Aufnahmebehälters 1 in den Aufnahmebehälter 1 ein. Dieses Gaszufuhrmittel 50 ist als aktives Gaszufuhrmittel 50 in Form einer Düse ausgebildet, d.h. es kann Gas mit Druck ins Innere des Schneidverdichters eingeblasen werden.

Die Düse ist in einer solchen Höhe bzw. in einem solchen Abstand zur Bodenfläche 3 angeordnet, dass sie ständig unterhalb des verfahrensmäßig vorgegebenen Füllstandes der im Schneidverdichter 1 befindlichen bzw. rotierenden Materialteilchen bzw. des Niveaus der bei der Bewegung bzw. Rotation der Materialteilchen ausgebildeten Mischthrombe liegt. Die Düse liegt im Bereich des unteren Drittels der Gesamthöhe des Schneidverdichters 1.

Die Düse ist in der Seitenwand 2 im Bereich zwischen den oberen Mischwerkzeugen 21 bzw. der oberen Trägerscheibe 9 und den unteren Mischwerkzeugen 12 bzw. der unteren Trägerscheibe 29 angeordnet und mündet somit in den unteren Innenraumteil 10 ein. Bei mehr als zwei übereinander angeordneten Trägerscheiben bzw. Mischwerkzeugen münden die Gaszufuhrmittel vorteilhafterweise im Bereich zwischen der obersten und der untersten Trägerscheibe bzw. im Bereich zwischen den obersten und den untersten Mischwerkzeugen. Auf diese Weise kann eine vorteilhafte Durchströmung und Durchmischung und somit eine vorteilhafte Aufarbeitung des Materials sichergestellt werden.

Vorteilhafterweise münden die Gaszufuhrmittel 50, nicht im Bereich der Kanten der Trägerscheiben bzw. der Mischwerkzeuge, sondern, insbesondere jeweils, in den Bereich zwischen jeweils zwei Trägerscheiben bzw. Mischwerkzeugen in den Aufnahmebehälter 1 ein bzw. sind dort angeordnet.

Die Düse ist als singuläre Öffnung in der Seitenwand 2 ausgebildet und weist einen Durchmesser von etwa 70 mm auf. Es können zusätzlich auch weitere derartige Öffnungen auf derselben Höhe, insbesondere gleichmäßig über den Umfang verteilt ausgebildet sein. Die Düse ist mit einer Abdeckung bzw. einem Schild 60 versehen, die/das verhindert, dass das rotierende Material in das Innere der Düse gedrückt werden kann. Die Abdeckung ist dabei vorteilhafterweise stromaufwärts zur Drehrichtung des Materials vor der Düse gelegen. Die Düse ist im wesentlichen auf der der Austragsöffnung 15 gegenüberliegenden Seite des Aufnahmebehälters 1 angeordnet. Im Bereich oberhalb des Materiallevels ist ein Gasabfuhrmittel 51 in Form einer aktiven Gasabsaugung bzw. einer Saugpumpe 53 vorgesehen. Alternativ kann das Gasabfuhrmittel 51 auch als passives Gasabfuhrmittel ausgebildet sein, was in einer einfachen Ausführungsform insbesondere bei einem oben offenen Aufnahmebehälter 1 der Fall ist.

Durch die Düse wird somit trockene, erwärmte Luft mit Druck ins Innere des Behälters 1 geblasen. Diese Luft wird durch die entstehende Zwangsströmung nach oben durch das bewegte Material geführt und nimmt die vorhandene Feuchtigkeit auf bzw. reißt die Störstoffe mit. Über die Absaugung 51 verlässt die mit Störstoffen angereicherte Luft den Aufnahmebehälter 1. Zurück bleibt ein von Störstoffen nahezu befreites Restmaterial. Auf diese Weise kann durch das vorteilhafte synergistische Zusammenwirken der Gasführung 50,51, der beiden Mischwerkzeuge 12,21 und des Durchbruches 36 das Material nahezu vollständig von störenden Substanzen befreit werden.

Die alternative Ausführungsform nach den Fig. 4 und 5 unterscheidet sich von jener nach den Fig. 1 und 2 vor allem dadurch, dass die unteren Mischwerkzeuge 12 nicht pendelnd aufgehängt sind, sondern starr auf einer weiteren Trägerscheibe 29 sitzen, die koaxial zur Trägerscheibe 9 angeordnet ist und über die gleiche Welle 4 zur Drehbewegung angetrieben sein kann. Dadurch kann der Rotor 7 schmäler ausgebildet werden oder als Verlängerung der Welle 4 zur Gänze entfallen. Wie bei der Ausführungsform nach den Fig. 1 und 2 sind die unteren Mischwerkzeuge 12 auf der Höhe der Austragsöffnung 15 des Behälters 1 angeordnet, um das im Raum 10 befindliche, bearbeitete Kunststoffmaterial wirksam in die Einzugsöffnung 27 des Schneckengehäuses 16 fördern zu können.

Die im Raum 10 unterhalb der oberen Trägerscheibe 9 befindlichen weiteren unteren Mischwerkzeuge 12 sind fest auf einer weiteren unterhalb der Trägerscheibe 9 angeordneten unteren Trägerscheibe 29 angeordnet, können aber auch schwenkbar an der Trägerscheibe 9 oder an der Welle 4 aufgehängt sein.

Wie bereits in Fig. 1 und 2 dargestellt ist ein Gaszufuhrmittel 50 im Bereich zwischen den Trägerscheiben 9,29 bzw. zwischen den oberen und den unteren Mischwerkzeugen 21,12 angeordnet und mündet in den Raum 10 ein.

Es ist zweckmäßig, die Temperatur des im Behälter 1 verarbeiteten Materiales zu überwachen. Hierzu ist, wie Fig. 4 zeigt, im oberen Schneidraum 26 oberhalb der Trägerscheibe 9 eine Temperaturmesseinheit 30 und eine Kühleinrichtung 33 vorgesehen, letztere kann als Kühlmitteleindüsung ausgebildet sein.

Wie bereits erwähnt, kann die Abfuhr der in den oberen Schneidraum 26 eintretenden flüchtigen Störsubstanzen durch eine Absaugung 51 unterstützt werden. Hierzu kann, wie Fig. 4 zeigt, oberhalb der in diesem Schneidraum 26 entstehenden Mischtrombe eine Absaugeinrichtung 51 vorgesehen sein.

Entsprechend Fig. 4 ist im Weg des aus dem Aufnahmebehälter 1 austretenden Gases eine Messeinrichtung 56 angeordnet, mit der die Temperatur des austretenden Gases und/oder dessen Feuchtigkeit und/oder der Gehalt der Störstoffe in diesem Gas festgestellt werden kann.

Eine Steuereinrichtung 58 ist schematisch dargestellt, mit der die erfindungsgemäße Vorrichtung bzw. deren Einzelelemente gesteuert bzw. eingeregelt werden können. Im vorliegenden Fall ist die Steuereinrichtung 58 mit den Gasabfuhrmitteln 51 und den Gaszufuhrmitteln 50 verbunden, dargestellt. Im Weg des zugeführten Gases liegen eine Heizeinrichtung 54 sowie eine Gastrocknungseinrichtung 55 und eine Pump- oder Gebläseeinrichtung 52. Mit diesen Einheiten kann unter Einwirkung der Steuereinrichtung 58 die Menge bzw. die Temperatur bzw. der Druck des zugeführten Gases geregelt werden. Es ist auch möglich, die Temperatur bzw. Feuchte des austretenden Gases zur Regelung der Temperatur und/oder Menge und/oder des Druckes des zugeführten Gases heranzuziehen.

Sofern der Aufnahmebehälter 1 als abgeschlossener Behälter ausgebildet ist, so entspricht die Menge des durch die Einbringungsöffnung 50 zugeführten Gases im wesentlichen der Menge des durch den Gasaustritt 51 austretenden Gases. Das austretende Gas kann Abtrennungseinheiten für die mitgenommenen Störstoffe, z.B. Zyklone oder Gasabscheider besitzen und kann als gereinigtes Gas, allenfalls recycliert, wiederum der Gaseintrittsöffnung 50 zugeführt werden.

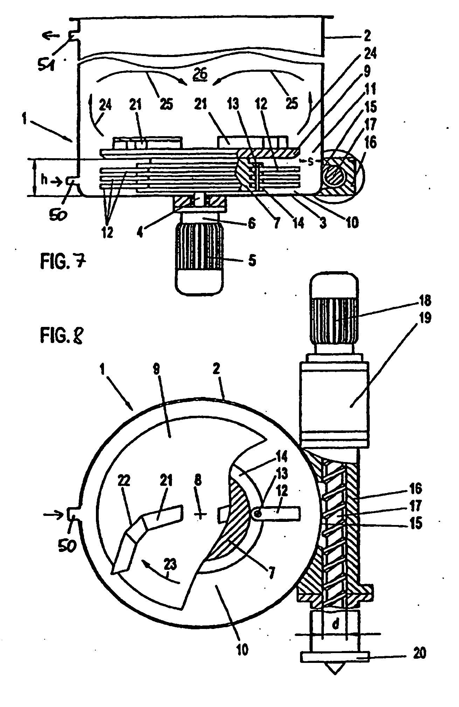

Die Vorrichtung gemäß Fig. 7 und 8 ist ähnlich der in Fig. 1 und 2 dargestellten Ausführungsform, allerdings sind in der oberen Trägerscheibe 9 keine Durchbrüche 36 ausgebildet. Hinsichtlich der Ausgestaltung sei auf die obigen Ausführungen verwiesen.

Auch bei der vorliegenden Ausführungsform wird unterhalb der oberen Trägerscheibe 9 ein freier unterer Innenraumteil 10 gebildet, der mit dem oberhalb der Trägerscheibe 9 befindlichen oberer Innenraumteil 26 des Behälters 1 über den zwischen dem Außenumfang der Trägerscheibe 9 und der Seitenwand 2 des Behälters 1 bestehenden Ringspalt 11 in freier Strömungsverbindung für das bearbeitete Material steht. Durch diesen freien Ringspalt 11 kann somit das behandelte Kunststoffgut aus dem Raum 26 oberhalb der Trägerscheibe 9 ungehindert in den darunterliegenden ringförmigen Innenraumteil 10 gelangen.

In diesem Ringraum 10 sind untere Mischwerkzeuge 12 angeordnet, welche in diesem Ringraum um die Achse 8 umlaufen. Durch die von diesen Werkzeugen 12 auf das Kunststoffmaterial ausgeübte Fliehkraft wird das Kunststoffmaterial in eine Austragöffnung 15 des Behälters 1 gedrückt, welche Öffnung 15 auf der Höhe der Werkzeuge 12 liegt und den unteren Innenraumteil 10 des Behälters 1 mit dem Inneren eines zylindrischen Gehäuses 16 verbindet, in welchem eine Schnecke 17 drehbar gelagert ist.

Die obere Trägerscheibe 9 trägt ebenfalls obere Mischwerkzeuge 21, die jedoch mit der Trägerscheibe 9 fest verbunden sind. Diese oberen Mischwerkzeuge 21 mischen und/oder zerkleinern und/oder erwärmen das im oberen Innenraumteil 26 des Behälters 1 befindliche Material. Für eine wirksame Zerkleinerung ist es zweckmäßig, die Werkzeuge 21 mit Schneidkanten 22 auszubilden.

Im Betrieb ergibt sich beim Umlauf der Trägerscheibe 9 durch den Einfluss der Werkzeuge 21 ein Umlauf der in den Behälter 1 eingebrachten Kunststoffmasse, wobei das Kunststoffmaterial entlang der Seitenwand 2 des Behälters 1 im oberen Innenraumteil 26 hochsteigt (Pfeile 24), und im Bereich der Achse des Behälters 1 wieder nach unten zurückfällt (Pfeile 25). Die so entstehende Mischtrombe durchwirbelt das eingebrachte Material, sodass ein guter Mischeffekt erzielt wird. Ein geringer Anteil des in den Behälter 1 eingebrachten, bereits zerkleinerten Materiales gelangt jedoch durch den Ringspalt 11 hindurch in den unteren Innenraumteil 10 unter der oberen Trägerscheibe 9 und wird dort durch die unteren Mischwerkzeuge 12 bearbeitet. Nach einer kurzen Einlaufzeit stellt sich ein Gleichgewichtszustand ein zwischen dem von der Schnecke 17 aus der Austragöffnung 15 und daher aus dem Ringraum 10 abgeführten Material und dem durch den Ringspalt 11 von oben in den Ringraum 10 zugeführten Material. Dies hat zur Folge, dass es sehr unwahrscheinlich bzw. sogar unmöglich ist, dass ein einmal in den Behälter 1 eingebrachtes Kunststoffteilchen in das Schneckengehäuse 16 gelangt, ohne zuvor eine ausreichende Verweilzeit im Behälter 1 verbracht zu haben bzw. ohne durch die Werkzeuge 12, 21 genügend bearbeitet worden zu sein. Die die Austragöffnung 15 durchsetzende Kunststoffmenge, welche von der Schnecke 17 abgeführt wird, hat daher annähernd gleichmäßige Beschaffenheit, insbesondere, was die Temperatur und die Größe der Kunststoffteilchen betrifft. Die Schnecke 17 muss daher weniger Arbeit in die Kunststoffmasse einbringen, um die Kunststoffmasse auf den gewünschten Plastifizierungsgrad zu bringen, was zur Folge hat, dass hohe thermische SpitzenBeanspruchungen auf das Kunststoffmaterial im Schneckengehäuse 16 entfallen. Dadurch wird das Kunststoffmaterial geschont und an Energie für den Antrieb der Schnecke 17 wesentlich gespart.

Form und Größe des Ringraumes 10 richten sich nach dem ins Auge gefassten Anwendungsgebiet. Der Abstand h, in welchem die Unterseite der Trägerscheibe 9 vom Boden 3 des Behälters 1 liegt, hängt von der Höhe des Rotors 7 ab und auch von der Größe und Lage der Austragöffnung 15. Günstige Verhältnisse ergeben sich, wenn die Höhe h des Ringraumes 10 mindestens gleich, vorzugsweise wesentlich größer ist als der Durchmesser d der Schnecke 17 bzw. dem Innendurchmesser des Schneckengehäuses 16. Im in Fig. 7 dargestellten Ausführungsbeispiel ist h : d = 1,56 und es ist die Anordnung zweckmäßig so getroffen, dass der von der Trägerscheibe 9 abgedeckte, außerhalb des Rotors 7 liegende Teil des Ringraumes 10 annähernd quadratischen Querschnitt hat. Andere Querschnittsformen dieses Ringraumes sind möglich, insbesondere dann, wenn andere Werkzeuge in diesem Ringraum 10 umlaufen, z.B. ein als Schaufelrad ausgebildeter Rotor 7.

Wie ersichtlich, ist für die beschriebene Betriebsweise die Größe des Ringspaltes 11 von Einfluss. Dieser Ringspalt soll nicht zu groß sein, damit verhindert wird, dass größere Materialteilchen durch diesen Ringspalt 11 hindurchtreten können. Anderseits soll dieser Spalt auch nicht zu klein sein, da sonst zu wenig Material unter die Trägerscheibe 9 in den unteren Innenraumteil 10 gelangt und somit die Gefahr besteht, dass die Schnecke 17 ungenügend befüllt wird.

Um sich an unterschiedliche, zu verarbeitende Materialien anpassen zu können, kann die Größe des Ringspaltes 11 veränderlich ausgebildet sein, z.B. mittels von der Trägerscheibe 9 getragener, relativ zu ihr verstellbarer Bauteile, durch welche der Spalt 11 teilweise abgedeckt bzw. in vergrößerter Breite freigegeben werden kann. Solche Bauteile können gegebenenfalls auch an der Wand 2 des Behälters 1 vorgesehen sein. Versuche haben gezeigt, dass sich günstige Werte für die in radialer Richtung gemessene Breite s (Fig. 7) des Ringspaltes 11 im Bereich von 20 bis 150 mm, vorzugsweise 20 bis 100 mm ergeben, unabhängig vom Durchmesser des Aufnahmebehälters 1, jedoch abhängig von der Art des zu verarbeitenden Gutes.

Es ist zweckmäßig, die im unteren Innenraumteil 10 des Aufnahmebehälters 1 befindlichen Werkzeuge 12 so zu gestalten, dass sie das in diesem Innenraumteil 10 befindliche Kunststoffmaterial weniger intensiv bearbeiten als die von der Trägerscheibe 9 getragenen, im oberen Innenraumteil 26 des Behälters 1 umlaufenden Werkzeuge 21.

Auch bei dieser Ausführungsform ist ein Gaszufuhrmittel 50 im Bereich zwischen den Trägerscheiben 9,29 bzw. zwischen den oberen und den unteren Mischwerkzeugen 21,12 angeordnet und mündet in den Raum 10 ein.

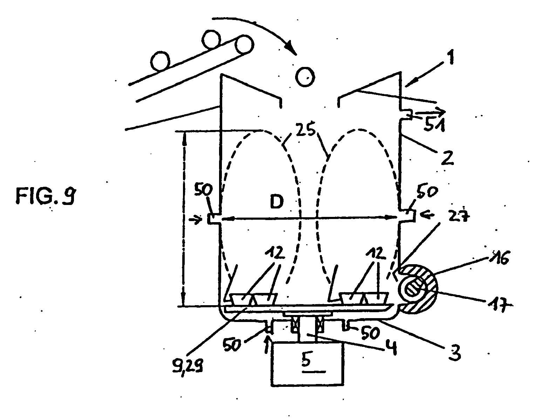

Fig. 9 zeigt ein weiteres Ausführungsbeispiel im Vertikalschnitt. Diese Vorrichtung weist einen Aufnahmebehälter 1 auf, in dem lediglich eine einzige Trägerscheibe 9,29 mit Mischwerkzeugen 12,21 im unteren Bereich knapp über dem Boden 3 in Höhe der Austragsöffnung 15 vorgesehen ist. Diese Mischwerkzeuge 12,21 erzeugen eine Bewegung der Materialteichen bzw. eine Mischthrombe 25.

Im Boden 3 und zwar im innersten Drittelbereich der Bodenfläche 3 ist ein zusätzliches aktives Gaszufuhrmittel 50 in Form eines um die Welle 4, insbesondere nahezu durchgehend, umlaufenden Ringspaltes vorgesehen, über das mit einem Gebläse 52 Gas eingeblasen wird. Zusätzlich ist in der Seitenwand 2 des Behälters 1 und zwar auf der Höhe, in der durch die bewegten Materialteichen der höchste Druck auf die Seitenwand 2 ausgeübt wird, ein weiteres aktives Gaszufuhrmittel 50 ausgebildet, das ebenfalls als sich über nahezu den gesamten Umfang erstreckender, umlaufender Ringspalt ausgebildet ist. Durch beide Gaszufuhrmittel 50 wird Gas ins Innere des Behälters 1 geblasen, durchsetzt das Material und wird mit Störstoffen angereichert über das Gasabfuhrmittel 51 wieder entfernt.

Gemäß einer alternativen Verfahrensführung kann zusätzlich vorgesehen sein, dass das Gas über in einer Bodenfläche 3 des Aufnahmebehälters 1, unterhalb des der Bodenfläche 3 nächsten Mischwerkzeuges 12, vorzugsweise im inneren Radiusdrittel der Bodenfläche 3, ausgebildete Gaszufuhrmittel 50, in den Aufnahmebehälter 1 eingebracht wird.

Gemäß einer alternativen Vorrichtung kann zusätzlich vorgesehen sein, dass die Gaszufuhrmittel 50, in der Bodenfläche 3 des Aufnahmebehälters 1 unterhalb des bodennächsten bzw. untersten bodennahen Mischwerkzeuges 12, vorzugsweise innerhalb des innersten Radiusdrittel der Bodenfläche 3, ausgebildet sind.

Gemäß einer weiteren alternativen Verfahrensführung kann zusätzlich vorgesehen sein, dass das Gas über im Bereich unterhalb des bodennächsten Mischwerkzeuges 12, ausgebildete Gaszufuhrmittel 50, vorzugsweise aktiv mit Druck bzw. über aktive Gaszufuhrmittel 50, in den Aufnahmebehälter 1 eingebracht wird.

Gemäß einer weiteren alternativen Vorrichtung kann zusätzlich vorgesehen sein, dass die Gaszufuhrmittel 50, in Form eines um die Durchführung der Antriebswelle 4 durch die Bodenfläche 3 herum verlaufenden Ringschlitzes ausgebildet sind.

Gemäß einer weiteren alternativen Verfahrensführung kann zusätzlich vorgesehen sein, dass das Gas über in zumindest einem Mischwerkzeug 12,21, insbesondere im bodennächsten Mischwerkzeug 12, vorzugsweise an der der Unterseite bzw. der der Bodenfläche 3 zugewendeten Seite des jeweiligen Mischwerkzeuges 12,21, ausgebildete Gaszufuhrmittel 50, vorzugsweise aktiv mit Druck bzw. über aktive Gaszufuhrmittel 50, in den Aufnahmebehälter 1 eingebracht wird.

Gemäß einer weiteren alternativen Verfahrensführung kann zusätzlich vorgesehen sein, dass die Gaszufuhrmittel 50, auf zumindest einem Mischwerkzeug 12,21 bzw. zumindest einer Trägerscheibe 9,29, insbesondere auf dem untersten, der Bodenfläche 3 nahen, Mischwerkzeug 12 bzw. der unteren Trägerscheibe 29, vorzugsweise auf der Unterseite bzw. der der Bodenfläche 3 zugewendeten Seite des jeweiligen Mischwerkzeuges 12,21 bzw. der jeweiligen Trägerscheibe 9,29 ausgebildet sind, wobei die Gaszufuhrmittel 50, in diesem Fall vorzugsweise als aktive Gaszufuhrmittel 50 ausgebildet sind.

Gemäß einer weiteren alternativen Verfahrensführung kann zusätzlich vorgesehen sein, dass die Gaszufuhrmittel 50, nahe der Achse 8, und insbesondere nahe den beim Umlauf der Trägerscheibe 9 nachlaufenden Rändern 37 der Werkzeuge 21, bzw. nahe dem Durchbruch 36 angeordnet sind.

## Patentansprüche

1. Verfahren zur Aufbereitung eines in einem, insbesondere zylindrischen, Aufnahmebehälter bzw. Schneidverdichter (1) durch zumindest ein Mischwerkzeug (12,21) bewegten, gemischten, erwärmten und gegebenenfalls zerkleinerten, stückig bzw. teilchenförmig vorliegenden, vorzugsweise thermoplastischen, Polymermaterials, , wobei im Zuge des Verfahrens unerwünschte Störstoffe, die die Aufbereitung bzw. weitere Bearbeitung des Polymermaterials beeinträchtigen, beispielsweise flüchtige Substanzen, insbesondere Feuchtigkeit bzw. Wasserdampf, aus dem Polymermaterial entfernt werden, indem ein Gas, insbesondere Luft oder ein Inertgas, in einem Bereich unterhalb des Niveaus des im Betrieb im Aufnahmebehälter (1) befindlichen Polymermaterials bzw. unterhalb des Materiallevels der sich ausbildenden Mischthrombe ins Innere des Aufnahmebehälters (1) eingebracht wird, wobei das Gas unter Ausbildung einer Zwangsströmung zumindest durch einen Teilbereich des Polymermaterials durchgeführt wird und wobei anschließend das nun mit Störstoffen angereicherte bzw. gesättigte Gas in einem Bereich oberhalb des Niveaus des im Betrieb im Aufnahmebehälter (1) befindlichen Polymermaterials bzw. oberhalb des Materiallevels der Mischthrombe aus dem Aufnahmebehälter (1) ausgebracht wird, **dadurch gekennzeichnet, dass** das Gas in den Aufnahmebehälter (1) über in einer Seitenwand (2) des Aufnahmebehälters (1) ausgebildete Gaszufuhrmittel (50,) eingebracht wird und zwar im Bereich oberhalb des bodennächsten Mischwerkzeuges (12).

2. Verfahren nach Anspruch 1, **dadurch gekennzeichnet, dass** das Gas über zumindest ein aktives Gaszufuhrmittel (50,), beispielsweise über mit Pump- oder Gebläseeinrichtungen (52) beaufschlagbare Düsen bzw. Blasöffnungen, aktiv mit Druck in den Aufnahmebehälter (1) unterhalb des Materiallevels eingedüst bzw. eingeblasen wird und/oder
dass das Gas über zumindest ein aktives Gasabfuhrmittel (51,) aktiv aus dem Bereich des Aufnahmebehälters (1) oberhalb des Materiallevels abgesaugt bzw. abgepumpt wird
und/oder
dass das Gas vor der Zufuhr erwärmt und/oder getrocknet wird
und/oder
dass bei dem aus dem Aufnahmebehälter (1) austretenden Gas die Temperatur, die Feuchtigkeit und/oder der Gehalt an Störstoffen gemessen werden und die Steuerung der Menge, der Temperatur und/oder der Feuchtigkeit des in den Aufnahmebehälter (1) eintretenden Gases in Abhängigkeit dieser gemessenen Werte erfolgt.

3. Verfahren nach Anspruch 1 oder 2, **dadurch gekennzeichnet, dass** das Gas über im Bereich des unteren Drittels der Höhe des Aufnahmebehälters (1) ausgebildete Gaszufuhrmittel (50,), vorzugsweise aktiv mit Druck bzw. über aktive Gaszufuhrmittel (50), in den Aufnahmebehälter (1) eingebracht wird
und/oder
dass das Gas bei Vorliegen von zwei oder mehr übereinanderliegenden Mischwerkzeugen (12,21) im Bereich zwischen den Mischwerkzeugen (12,21), eingebracht wird
und/oder
dass das Gas in demjenigen Bereich des Behälters (1) eingebracht wird, in dem die im Behälter (1) bewegten bzw. rotierenden Materialteilchen den höchsten Druck auf die Seitenwand (2) des Behälters (1) ausüben.

4. Vorrichtung zur Durchführung des Verfahrens nach einem der Ansprüche 1 bis 3, mit zumindest einem, insbesondere im wesentlichen trichterförmigen oder zylindrischen, insbesondere eine Bodenfläche (3) und eine Seitenwand (2) aufweisenden, Aufnahmebehälter bzw. Schneidverdichter (1), in dem zumindest ein, insbesondere um eine vertikale Achse (8) drehbares, Mischwerkzeug (12,21) angeordnet ist, das ein im Inneren des Aufnahmebehälters (1) vorgelegtes, aufzubereitendes, vorzugsweise stückiges bzw. teilchenförmiges, Polymermaterial, insbesondere in Form von nicht geschmolzenen Polymerteilchen bewegt , mischt, erwärmt bzw. gegebenenfalls zerkleinert bzw. auf dieses Polymermaterial einwirkt, wobei im Aufnahmebehälter (1) unterhalb des Niveaus des im Betrieb im Aufnahmebehälter (1) befindlichen Polymermaterials bzw. unterhalb des Materiallevels einer sich im Betrieb ausbildenden Mischthrombe zumindest ein Gaszufuhrmittel (50) für den Eintritt eines Gases, insbesondere von Luft oder Inertgas, ins Innere des Aufnahmebehälters (1) ausgebildet bzw. angeschlossen ist und wobei im Aufnahmebehälter (1) oberhalb des Niveaus des im Betrieb im Aufnahmebehälter (1) befindlichen Polymermaterials bzw. oberhalb des Materiallevels der Mischthrombe zumindest ein Gasabfuhrmittel (51) für den Austritt des mit Störstoffen, insbesondere mit Wasserdampf, angereicherten bzw. gesättigten Gases aus dem Aufnahmebehälter (1) ausgebildet bzw. angeschlossen ist, **dadurch gekennzeichnet, dass** die Gaszufuhrmittel (50,) in der Seitenwand (2) des Aufnahmebehälters (1) angeordnet sind bzw. in der Seitenwand (2) des Aufnahmebehälters (1) in den Aufnahmebehälter (1) einmünden bzw. ausgebildet sind, wobei die Gaszufuhrmittel (50,) im Bereich oberhalb des bodennächsten bzw. untersten bodennahen Mischwerkzeuges (12) angeordnet sind.

5. Vorrichtung nach Anspruch 4, **dadurch gekennzeichnet, dass** zumindest eine Schnecke (17) zum Abtransport des Materiales aus dem Aufnahmebehälter (1) vorgesehen ist, deren Gehäuse (16) mit einer Einzugsöffnung (27) an eine Austragöffnung (15) des Aufnahmebehälters (1), beispielsweise radial oder tangential, angeschlossen ist, wobei die Austragöffnung (15) in der Seitenwand (2) nahe der Bodenfläche (3) des Aufnahmebehälter (1) angeordnet ist.

6. Vorrichtung nach Anspruch 4 oder 5, **dadurch gekennzeichnet, dass** jedes Mischwerkzeug (12,21) auf einer Trägerscheibe (9,29) angeordnet ist, die durch eine in den Innenraum des Aufnahmebehälters (1) hineingeführte Welle (4) zum Umlauf um die Achse (8) der Welle (4) angetrieben ist
und/oder
dass im Aufnahmebehälter (1) zumindest zwei übereinander angeordnete Mischwerkzeuge (12,21) vorgesehen sind, vorzugsweise genau zwei übereinander angeordnete Mischwerkzeuge (12,21), nämlich, insbesondere auf einer oberen Trägerscheibe (9) angeordnete, obere Mischwerkzeuge (21) und, insbesondere auf einer unteren bodennahen Trägerscheibe (29) angeordnete, untere bodennahe bzw. dem Boden (3) nächste Mischwerkzeuge (12), wobei im Aufnahmebehälter (1) oberhalb der oberen Mischwerkzeuge (21) ein oberer Innenraumteil (26) sowie unterhalb der oberen Mischwerkzeuge (21) ein in demselben Aufnahmebehälter (1) befindlicher, unterer Innenraumteil (10) ausgebildet ist, in welchem die bodennahen Mischwerkzeuge (12) und die Austragsöffnung (15) angeordnet sind, wobei der obere Innenraumteil (26), insbesondere über einen, zwischen dem Außenumfang der oberen Trägerscheibe (9) und der Seitenwand (2) des Aufnahmebehälters (1) bestehenden freien Ringspalt (11), mit dem unteren Innenraumteil (10) des Aufnahmebehälters (1) in Verbindung steht, wobei beim Umlauf der oberen Mischwerkzeuge (21) ein Anteil des im oberen Innenraumteil (26) befindlichen Materiales, insbesondere durch den Ringspalt (11) hindurch, in den unteren Innenraumteil (10) gelangt und von dort durch die untere bodennahen Mischwerkzeuge (12) in die Austragsöffnung (15) gefördert wird
und/oder
dass eine obere Trägerscheibe (9) zumindest einen, vorzugsweise nahe der Achse (8), und insbesondere nahe den beim Umlauf der Trägerscheibe (9) nachlaufenden Rändern (37) der Werkzeuge (21), angeordneten, die Trägerscheibe (9) durchsetzenden Durchbruch (36) aufweist, welcher den oberen Innenraumteil (26) mit dem unteren Innenraumteil (10) verbindet.

7. Vorrichtung nach einem der Ansprüche 4 bis 6, **dadurch gekennzeichnet, dass** die Gaszufuhrmittel (50) als passive Gaszufuhrmittel (50), beispielsweise als Durchgangsöffnungen, ausgebildet sind, durch die das Gas passiv, beispielsweise durch Unterdruck im Aufnahmebehälter (1), ins Innere des Aufnahmebehälters (1) einsaugbar ist oder dass die Gaszufuhrmittel (50) als aktive Gaszufuhrmittel (50), beispielsweise als über Pump- oder Gebläseeinrichtungen (52) beaufschlagbare Düsen od. dgl., ausgebildet sind, durch die das Gas ins Innere des Aufnahmebehälters (1) mit Druck aktiv einblas-, eindüs-, bzw. einpumpbar ist
und/oder
dass die Gasabfuhrmittel (51) als passive Gasabfuhrmittel (51), beispielsweise als Durchgangsöffnungen, ausgebildet sind, durch die das Gas passiv, beispielsweise durch Überdruck im Aufnahmebehälter (1), aus dem Aufnahmebehälter (1) ausbringbar ist oder dass die Gasabfuhrmittel (51) als aktive, beispielsweise über Saugeinrichtungen (53) beaufschlagbare, Gasabfuhrmittel (51) ausgebildet sind, durch die das Gas aus dem Aufnahmebehälter (1) aktiv absaugbar bzw. abpumpbar ist
und/oder
eine den Gaszufuhrmitteln (50) vorgeschaltete Heizeinrichtung (54) vorgesehen ist, über die das ins Innere des Aufnahmebehälters (1) einzubringende Gas erwärmbar ist und/oder dass eine den Gaszufuhrmitteln (50) vorgeschaltete Gastrocknungseinrichtung (55) vorgesehen ist, über die das ins Innere des Aufnahmebehälters (1) einzubringende Gas getrocknet wird.

8. Vorrichtung nach einem der Ansprüche 4 bis 7, **dadurch gekennzeichnet, dass** die Gaszufuhrmittel (50) zur Regulierung der Gaszufuhr und/oder die Gasabfuhrmittel (51) zur Regulierung der Gasabfuhr zumindest teilweise verschließbar bzw. steuerbar sind
und/oder
dass die Gaszufuhrmittel (50,) als einzelne, singuläre Öffnungen mit einem Durchmesser zwischen 10 und 300 mm, vorzugsweise zwischen 50 und 90 mm ausgebildet sind
und/oder
dass die Gaszufuhrmittel (50,) auf ihrer dem Inneren des Aufnahmebehälters (1) zugewendeten Seite, insbesondere stromaufwärts der Drehrichtung des Materials im Aufnahmenbehälter (1), eine Abdeckung bzw. einen Schild (60) zum Schutz vor dem im Aufnahmebehälter (1) befindlichen Material aufweisen.
und/oder
dass die Gaszufuhrmittel (50,) bündig mit der Innenwand des Behälters (1) und/oder des Mischwerkzeuges (12,21) abschließen und insbesondere nicht von der Innenseite des Behälters (1) oder des Mischwerkzeuges (12,21) ins Innere des Behälters (1) vor- bzw. abstehen.

9. Vorrichtung nach einem der Ansprüche 4 bis 8, **dadurch gekennzeichnet, dass** die Gaszufuhrmittel (50,) im Aufnahmebehälter (1) in einer Höhe bzw. in einem Abstand zur Bodenfläche (3) angeordnet sind, in der die Gaszufuhrmittel (50,) ständig unterhalb des verfahrensmäßig vorgegebenen Füllstandes der im Aufnahmebehälter (1) befindlichen bzw. rotierenden Materialteilchen bzw. des Niveaus der bei der Bewegung bzw. Rotation der Materialteilchen ausgebildeten Mischthrombe liegen, wobei die Gaszufuhrmittel (50,) insbesondere im Bereich des unteren Drittels der Höhe des Aufnahmebehälters (1), angeordnet sind.

10. Vorrichtung nach einem der Ansprüche 4 bis 9, **dadurch gekennzeichnet, dass** die Gaszufuhrmittel (50,) in der Seitenwand (2) im Bereich zwischen zumindest zwei übereinander angeordneten Trägerscheiben (9,29) bzw. Mischwerkzeugen (12,21) bzw. im Bereich zwischen den obersten und den untersten Trägerscheiben bzw. Mischwerkzeugen, vorzugsweise zwischen den oberen Mischwerkzeugen (21) bzw, der oberen Trägerscheibe (9) und den unteren bzw. untersten Mischwerkzeugen (12) bzw. der unteren Trägerscheibe (29) angeordnet sind bzw. in den unteren Innenraumteil (10) einmünden, wobei die Gaszufuhrmittel (50,) vorzugsweise, insbesondere jeweils, in den Bereich zwischen jeweils zwei Trägerscheiben bzw. Mischwerkzeugen, insbesondere mittig zwischen diesen, einmünden bzw. dort angeordnet sind
und/oder
dass die Gaszufuhrmittel (50,) in demjenigen Bereich der Seitenwand (2) des Behälters (1) angeordnet sind, in dem die im Behälter (1) bewegten bzw. rotierenden Materialteilchen den höchsten Druck auf die Seitenwand (2) des Behälters (1) ausüben.

11. Vorrichtung nach einem der Ansprüche 4 bis 10, **dadurch gekennzeichnet, dass** die Gaszufuhrmittel (50,) in der Seitenwand (2) auf gleicher Höhe über den Umfang der Innenwand des Aufnahmebehälters (1), vorzugsweise gleichmäßig verteilt, angeordnet sind
und/oder
dass die Gaszufuhrmittel (50,) in der Seitenwand (2) in Form eines umfänglich, insbesondere vollständig, umlaufenden Ringspaltes ausgebildet sind.

12. Vorrichtung nach einem der Ansprüche 4 bis 11, **dadurch gekennzeichnet, dass** auf der der Bodenfläche (3) zugewendeten Unterseite einer untersten Trägerscheibe (29), und gegebenenfalls auch auf den Unterseiten allfälliger weiterer Trägerscheiben (9), zumindest ein, vorzugsweise mehrere, von der Trägerscheibe (29) abragende, insbesondere radial und gegebenenfalls gekrümmt ausgebildete, Förderflügel (65) ausgebildet sind, die eine Material- und Gasströmung vom Bereich unterhalb der untersten Trägerscheibe (29) nach oben, insbesondere über den Ringspalt (11) und/oder die Durchbrüche (36) in den Bereich oberhalb der untersten Trägerscheibe (29), bewirken.

13. Vorrichtung nach einem der Ansprüche 4 bis 12, **dadurch gekennzeichnet, dass** die Gasabfuhrmittel (51) in einem der Bodenfläche (3) des Aufnahmebehälters (1) bzw. dem Material bzw. der Mischthrombe fernen Bereich, insbesondere im Deckel des Aufnahmebehälters (1), angeordnet sind
und/oder
dass zumindest eine vom abgeführten Gas beaufschlagte, insbesondere den Gasabfuhrmitteln (51,) nachgeschaltete, Messeinrichtung (56) zur Messung der Temperatur, und/oder gegebenenfalls der Feuchtigkeit bzw. des Gehaltes der Störstoffe im aus den Gasabfuhrmitteln (51,) aus dem Aufnahmebehälter (1) austretenden Gas, vorgesehen ist
und/oder
dass eine Steuereinrichtung (58) vorgesehen ist, die bei Vorhandensein einer der folgenden Vorrichtungen mit der Heizeinrichtung (54) und/oder der Gastrocknungseinrichtung (55) und/oder der Pump- oder Gebläseeinrichtung (52) und/oder der Saugeinrichtung (53) verbunden ist und diese gegebenenfalls in Abhängigkeit von vorgegebenen Materialparametern und/oder der Temperatur des austretenden Gases und/oder Art der Störstoffe steuert bzw. regelt.

## Claims

1. A process for treating pellets or particles of a, preferably thermoplastic, polymer material in a, particularly cylindrical, receiving container or cutter compactor (1), said polymer material being agitated by at least one mixing tool (12, 21) and being mixed, heated, and optionally crushed, undesired interfering substances which negatively affect the treating or further processing of the polymer material, such as volatile substances, in particular humidity or water vapor, being removed from the polymer material in the course of the process by introducing a gas, in particular air or an inert gas, into the interior of the receiving container (1) in an area below the level of the polymer material present in the receiving container (1) during operation or below the material level of the created mixing vortex, said gas being directed at least through a part of the polymer material while creating a forced flow and the gas, enriched or saturated with interfering substances, being then discharged from the receiving container (1) in an area above the level of the polymer material present in the receiving container (1) during operation or above the material level of the created mixing vortex, **characterized in that** said gas is introduced into the receiving container (1) via gas supply means (50) formed in the lateral wall (2) of said receiving container (1) in an area above the mixing tool (12) which is closest to the bottom.

2. The process according to claim 1, **characterized in that** the gas is actively injected or blown into the receiving container (1) in a pressurized state below the material level via at least one active gas supply means (50), for example via nozzles or blow openings pressurized by pumping or fan installations (52), and/or
**in that** the gas is actively sucked or pumped out of the area of the receiving container (1) above the material level by means of at least one active gas discharging means (51), and/or in that the gas is heated and/or dried before being supplied, and/or
**in that** the temperature, the humidity, and/or the amount of interfering substances of the gas discharged from the receiving container (1) are measured and the amount, temperature, and/or humidity of the gas introduced into the receiving container (1) are controlled based on the measured values.

3. The process according to claim 1 or claim 2, **characterized in that** the gas is introduced into the receiving container (1) via gas supply means (50) formed in the area of the bottom third of the height of the receiving container (1), preferably actively and in a pressurized state or via active gas supply means (50), and/or
**in that**, if there are two or more superimposed mixing tools (12, 21), the gas is introduced into the area between said mixing tools (12, 21), and/or
**in that** the gas is introduced into that area of the container (1) in which the material particles, which are agitated or circulating within the container (1), exercise the highest pressure on the lateral wall (2) of the container (1).

4. A device for implementing the procedure according to any one of the claims 1 to 3, having at least one, in particular essentially funnel-shaped or cylindrical, receiving container or cutter compactor (1) which has in particular a bottom surface (3) and a lateral wall (2) and in which at least one mixing tool (12, 21), which is, in particular, rotatable around a vertical axis (8) and which mixes, heats, optionally crushes, or acts on pellets or particles of a, preferably thermoplastic, polymer material to be treated which is present in the receiving container (1), in particular in the form of molten polymer particles, is arranged, at least one gas supply means (50) for introducing a gas, in particular air or an inert gas, into the interior of the receiving container (1) being formed in or connected to the receiving container (1) below the level of the polymer material present in said receiving container (1) during operation or below the material level of a mixing vortex created during operation and at least one gas discharging means (51) for discharging the gas which is enriched or saturated with interfering substances, in particular water vapor, being formed in or connected to the receiving container (1) above the level of the polymer material present in said receiving container (1) during operation or above the material level of the mixing vortex, **characterized in that** the gas supply means (50) are arranged in the lateral wall (2) of the receiving container (1) or lead into the receiving container (1) through the lateral wall (2) of said receiving container (1), said gas supply means (50) being arranged in the area above the mixing tool (12) which is closest to the bottom or above the lowest bottom mixing tool (12).

5. The device according to claim 4, **characterized in that** at least one screw (17) for transporting the material out of the receiving container (1) is provided, whose casing (16) is connected, for example radially or tangentially, to a discharge opening (15) of the receiving container (1) via a feeding opening (27), said discharge opening (15) being arranged in the lateral wall (2) close to the bottom surface (3) of the receiving container (1).

6. The device according to claim 4 or claim 5, **characterized in that** each mixing tool (12, 21) is arranged on a support disc (9, 29) whose rotary movement around the axis (8) of a shaft (4) is driven by said shaft (4) which is inserted into the interior of the receiving container (1), and/or
**in that** at least two, preferably exactly two, superimposed mixing tools (12, 21) are provided in the receiving container (1), in particular upper mixing tools (21) arranged on an upper support disc (9) and bottom mixing tools (12) or mixing tools (12) closest to the bottom arranged on a lower bottom support disc (29), an upper interior section (26) being formed in the receiving container (1) above the upper mixing tools (21) and a lower interior section (10), in which the bottom mixing tools (12) and the discharge opening (15) are arranged, being formed in the same receiving container (1) below the upper mixing tools (21), the upper interior section (26) being connected to the lower interior section (10) of the receiving container (1), particularly via a free annular slit (11) between the outer circumference of the upper support disc (9) and the lateral wall (2) of the receiving container (1), a portion of the material in the upper interior section (26) being transported into the lower interior section (10), in particular via said annular slit (11), when the upper mixing tools (21) are rotating, and being transported into the discharge opening (15) by the lower bottom mixing tool (12) from there, and/or
**in that** an upper support disc (9) has at least one passage (36) extending through it, preferably close to the axis (8) and, in particular, close to those edges (37) of the tools (21) trailing behind when the support disc (9) is rotating, said passage (36) connecting the upper interior section (26) to the lower interior section (10).

7. The device according to any one of the claims 4 to 6, **characterized in that** the gas supply means (50) are formed as passive gas supply means (50), for example as bores, through which the gas may be sucked passively into the interior of the receiving container (1), for example by means of negative pressure in said receiving container (1) or **in that** the gas supply means (50) are formed as active gas supply means (50), for example as nozzles, or the like, pressurized by pumping or fan installations (52), through which the gas may be actively blown, injected or pumped into the interior of the receiving container (1) in a pressurized state, and/or
**in that** the gas discharging means (51) are formed as passive gas discharging means (51), for example in the form of bores, through which the gas may be passively discharged from the receiving container (1), for example by means of excessive pressure in said receiving container (1) or **in that** the gas discharging means (51) are formed as active gas discharging means (51), which may, for example, be pressurized by suction installations (53) and through which the gas may actively be sucked or pumped out of the receiving container (1), and/or
**in that** a heating device (54) is provided upstream of said gas supply means (50), the gas which is to be introduced into the interior of the receiving container (1) being heatable by means of said heating device (54), and/or **in that** a gas drying device (55) is provided upstream of said gas supply means (50), the gas which is to be introduced into the interior of the receiving container (1) being dried by means of said drying device (54).

8. The device according to any one of the claims 4 to 7, **characterized in that** at least some of the gas supply means (50) and/or of the gas discharging means (51) are closable or controllable in order to regulate the gas supply and the gas discharge, respectively, and/or
**in that** the gas supply means (50) are formed as individual singular passages having a diameter between 10 and 300 mm, preferably between 50 and 90 mm, and/or
**in that** the gas supply means (50) have a cover or a screen (60) for protecting them from the material in the receiving container (1) on their surfaces facing the interior of the receiving container (1), particularly upstream in relation to the circulating direction of the material within the receiving container (1), and/or
**in that** the gas supply means (50) are flush mounted to the inner wall of the container (1) and/or of the mixing tool (12, 21) and particularly do not project from the inner surface of the container (1) or the mixing tool (12, 21) into the interior of the container (1).

9. The device according to any one of the claims 4 to 8, **characterized in that** the gas supply means (50) are arranged in the receiving container (1) at a height or at a distance from the bottom surface (3) at which said gas supply means (50) are constantly below the filling level, as determined by the process, of the material particles present or circulating within the receiving container (1) or below the level of the mixing vortex created by the movement or rotation of the material particles, said gas supply means (50) being particularly arranged in the area of the bottom third of the height of the receiving container (1).

10. The device according to any one of the claims 4 to 9, **characterized in that** the gas supply means (50) are arranged in the lateral wall (2) in the area between at least two superimposed support discs (9, 29) or mixing tools (12, 21) or in the area between the top and the lowest support discs or mixing tools, preferably between the upper mixing tools (21) or between the upper support disc (9) and the lower or lowest mixing tools (12) or the lower support disc (29), or lead into the lower interior section (10), said gas supply means (50), particularly each of them, preferably being arranged in or leading into the area between two support discs or mixing tools, particularly centrally between them, and/or
**in that** the gas supply means (50) are arranged in the area of the lateral wall (2) of the container (1) in which the material particles agitated or circulating within the container (1) exercise the highest pressure on the lateral wall (2) of the container (1).

11. The device according to any one of the claims 4 to 10, **characterized in that** the gas supply means (50) are arranged in the lateral wall (2) at the same height around the circumference of the inner wall of the receiving container (1), preferably equally distributed, and/or
**in that** the gas supply means (50) are formed in the lateral wall (2) in the form of an annular slit extending along the circumference, in particular along the overall circumference.

12. The device according to any one of the claims 4 to 11, **characterized in that** at least one, preferably more, conveyor blades (65) are provided on the lower surface, facing the bottom surface (3), of a bottommost support disc (29) and, optionally, on the lower surfaces of any further support discs (9), said conveyor blades (65) projecting from said support disc (29), being formed radially and, optionally, in a curved shape, and creating an upward material and gas flow from the area below the bottommost support disc (29), particularly via the ring slit (11) and/or the passages (36), into the area above the bottommost support disc (29).

13. The device according to any one of the claims 4 to 12, **characterized in that** the gas discharging means (51) being arranged in an area removed from the bottom surface (3) of the receiving container (1) and from the material and from the mixing vortex, in particular in the lid of the receiving container (1), and/or
**in that** at least one measuring device (56), pressurized by the discharged gas and particularly downstream in relation to the gas discharging means (51), is provided for measuring the temperature and/or, optionally, the humidity or the content of interfering substances in the gas discharged via the gas discharging means (51) from the receiving container (1), and/or
**in that** a control device (58) is provided, said control device (58) being connected to the heating device (54) and/or the gas drying device (55) and/or the pumping or fan installations (52) and/or the suction device (53), if any of the above-mentioned are provided, and optionally controls or regulates them based on predetermined material parameters and/or the temperature of the discharged gas and/or the nature of the interfering substances.

## Revendications

1. Procédé pour le traitement d'une matière polymérique, de préférence thermoplastique, en morceaux ou en particules, dans un récipient ou un broyeur-compacteur (1) cylindrique, ladite matière étant agitée, mélangée, réchauffée et, éventuellement, broyée par au moins un outil de mélange (12, 21); au cours du dit procédé, des substances interférentes indésirables, entravant le traitement de la matière polymérique, par exemple des substances volatiles, notamment de l'humidité et de la vapeur d'eau, sont éliminées de la matière polymérique en introduisant un gaz, notamment de l'air ou un gaz inerte dans l'intérieur dudit récipient (1) dans un endroit au-dessous du niveau de la matière dans le récipient (1) ou au-dessous du niveau de matière du tourbillon mélangeur formé pour éliminer, puis, en évacuant le gaz, enrichi ou saturé en substances interférentes, du récipient (1) dans un endroit au-dessus du niveau de la matière dans le récipient (1) ou au-dessus du niveau de matière du tourbillon mélangeur en formant un courant forcé, étant dirigé au moins à travers un part de la matière et, **caractérisé en ce que** le gaz est introduit dans le récipient (1) à travers une paroi latérale (2) du récipient (1) par des moyens d'alimentation en gaz (50), dans un endroit au-dessus de l'outil de mélange (12) le plus proche du fond.

2. Procédé selon la revendication 1, **caractérisé en ce que** le gaz est injecté ou insufflé, de manière active et dans un état pressurisé, dans le récipient (1) au-dessous le niveau de la matière par un moyen d'alimentation en gaz (50) actif, par exemple par des tuyères ou des orifices soufflants qui peuvent être pressurisés par des installations de pompage ou des installations soufflantes (52),
et/ou
**en ce que** le gaz est activement évacué, par aspiration ou par pompage, du récipient (1) en utilisant des moyens d'évacuation de gaz (51) au-dessus du niveau de la matière,
et/ou
**en ce que** le gaz est réchauffé et/ou séché avant d'être introduit
et/ou
**en ce que** la température, l'humidité et/ou la teneur en substances interférentes du gaz évacué du récipient sont mesurées et la quantité, la température et/ou l'humidité du gaz introduit dans le récipient (1) sont réglée sur la base de ces valeurs.

3. Procédé selon la revendication 1 ou 2, **caractérisé en ce que** le gaz est introduit par des moyens d'alimentation en gaz (50) fournis dans le tiers inférieur de la hauteur du récipient (1), de préférence activement et dans un état pressurisé ou par des moyens d'alimentation en gaz (50) actifs,
et/ou
**en ce que**, s'il y a deux ou plusieurs outils de mélange et de broyage (12, 21) superposés, le gaz es introduit dans l'endroit entre lesdits outils de mélange et de broyage (12, 21),
et/ou
**en ce que** le gaz est introduit dans l'endroit du récipient (1) où les particules de matière, agités et circulants dans le récipient (1), exercent la pression la plus forte sur la paroi latérale (2) du récipient (1),

4. Dispositif pour réaliser un procédé selon l'une des revendications 1 à 3, avec au moins un récipient ou un broyeur-compacteur (1), notamment en entonnoir ou cylindrique, notamment avec une surface de fond (3) et une paroi latérale verticale (2), dans lequel au moins un outil de mélange et de broyage (12, 21), notamment tournant autour un axe vertical (8), est disposé pour mélanger, réchauffer et, éventuellement, broyer une matière polymérique à traiter, de préférence en forme de morceaux ou de particules, présente à l'intérieur du récipient (1), notamment en forme de particules polymérique non-fondues, ou agit sur ladite matière polymérique, au moins un moyen d'alimentation en gaz (50), pour introduire un gaz dans l'intérieur du récipient, étant fourni dans un endroit au-dessous du niveau de la matière dans le récipient (1) ou au-dessous du niveau de matière du tourbillon mélangeur formé et au moins un moyen d'évacuation de gaz (51), pour évacuer le gaz enrichi ou saturé en substances interférentes du récipient (1), étant fourni dans un endroit au-dessus du niveau de la matière dans le récipient (1) ou au-dessus du niveau de matière du tourbillon mélangeur, **caractérisé en ce que** les moyens d'alimentation en gaz (50) sont disposé dans la paroi latérale (2) du récipient (1) ou y aboutissent dans ledit récipient (1), les moyens d'alimentation en gaz (50) étant disposés au-dessus des outils de mélange (12) les plus proches du fond ou proches du fond.

5. Dispositif selon la revendication 4, **caractérisé en ce qu'**au moins une vis (17) pour évacuer la matière du récipient (1) est fournie, un orifice d'alimentation (27) de la boîte (16) de ladite vis (17) étant joint à un orifice d'évacuation (15) du récipient, par exemple de manière radiale ou tangentielle, ledit orifice d'évacuation (15) étant disposé dans la paroi latérale (2) près de la surface de fond (3) du récipient.

6. Dispositif selon la revendication 4 ou 5, **caractérisé en ce que** chaque outil de mélange et de broyage (12, 21) est disposé sur un disque support (9, 29) qui est tourné par un arbre (4) introduit dans l'intérieur du récipient (1) autour de l'axe (8) dudit arbre (4),
et/ou
au moins deux outils de mélange et de broyage (12, 21) superposés sont disposés dans le récipient (1), de préférence exactement deux outils de mélange et de broyage (12, 21) superposés, notamment des outils de mélange et de broyage (12, 21) supérieurs sur un disque support (9) supérieur et des outils de mélange et de broyage (12, 21) proches ou les plus proches de la surface de fond (3) sur un disque support (29) inférieur, une partie supérieure (26) de l'intérieur étant formée dans le récipient (1) au-dessus des outils de mélange et de broyage (21) supérieurs et une partie inférieure (10) de l'intérieur étant formé dans le même récipient (1) au-dessous des outils de mélange et de broyage (21) supérieurs, les outils de mélange et de broyage (12) proches du fond et l'orifice d'évacuation (15) étant disposé dans ladite partie inférieure (10), la partie supérieure (26) de l'intérieur étant reliée à la partie inférieure (10) du récipient, notamment par une fissure annulaire (11) libre entre la circonférence extérieure du disque support (9) supérieur et la paroi latérale (2) du récipient, une fraction de la matière dans la partie supérieure (26) étant transportée dans la partie inférieure (10), notamment à travers la fissure annulaire (11), quand les outils de mélange et de broyage (21) supérieurs tournent, et, puis, étant transporté vers l'orifice d'évacuation (15) par les outils de mélange et de broyage (12) proches du fond,
et/ou
**en ce que** un disque support (9) présente au moins un passage (36) s'étendant de préférence près de l'axe (8), notamment près des bords (37) des outils (21) étant les bords arrières quand le disque support (9) tourne, et à travers dudit disque support (9), ledit passage reliant la partie supérieure (26) à la partie inférieure (10) de l'intérieur.

7. Dispositif selon l'une des revendications 4 à 6, **caractérisé en ce que** les moyens d'alimentation en gaz (50) sont des moyens d'alimentation en gaz (50) passifs, par exemple comme des orifices, à travers desquels le gaz peut être aspiré, par exemple par une pression négative dans le récipient, dans l'intérieur du récipient ou **en ce que** les moyens d'alimentation en gaz (50) sont des moyens d'alimentation en gaz (50) actifs, par exemple comme des tuyères ou d'autres choses semblables qui peuvent être pressurisés par des installations de pompage ou des installations soufflantes (52), à travers desquels le gaz peut être activement injecté, insufflé ou pompé dans l'intérieur du récipient (1),
et/ou
**en ce que** les moyens d'évacuation de gaz (51) sont des moyens d'évacuation en gaz (51) passifs, par exemple comme des orifices, à travers desquels le gaz peut être évacué du récipient (1), par exemple par une pression excessive dans le récipient, ou **en ce que** les moyens d'évacuation de gaz (51) sont des moyens d'évacuation de gaz (51) actifs, par exemple comme des installations d'aspiration (53), à travers desquels le gaz peut être activement évacué du récipient (1) par pompage ou par aspiration,
et/ou
**en ce qu'**une installation de chauffage (54) est fournie en amont des moyens d'alimentation en gaz (50), qui peut réchauffer le gaz à introduire dans l'intérieur du récipient (1), et/ou **en ce que** une installation de séchage (55) est fournie en amont des moyens d'alimentation en gaz (50), qui peut sécher le gaz à introduire dans l'intérieur du récipient (1).

8. Dispositif selon l'une des revendications 4 à 7, **caractérisé en ce que** les moyens d'alimentation en gaz (50) et/ou les moyens d'évacuation de gaz (51) sont au moins partiellement fermant ou réglable pour régler l'alimentation en ou l'évacuation de gaz,
et/ou
**en ce que** les moyens d'alimentation en gaz (50) sont formés comme des orifices singuliers individuels ayant un diamètre entre 10 et 300 mm, de préférence entre 50 et 90 mm,
et/ou
**en ce que** les moyens d'alimentation en gaz (50) ont un couvercle ou un écran (60), pour les protéger de la matière présente dans le récipient (1), sur leur face orientée vers l'intérieur du récipient (1), notamment en amont par rapport au sens de rotation de la matière dans le récipient (1),
et/ou
**en ce que** les moyens d'alimentation en gaz (50) sont à fleur de la paroi intérieure du récipient (1) et/ou de l'outil de mélange et de broyage (12, 21) et notamment ne sont pas en saillie par rapport à la face intérieure du récipient (1) ou de l'outil mélange et de broyage (12, 21) vers l'intérieur du récipient (1).

9. Dispositif selon l'une des revendications 4 à 8, **caractérisé en ce que** les moyens d'alimentation en gaz (50) sont disposés dans le récipient (1) à une hauteur ou à une distance de la surface de fond (3) où ils se trouvent constamment au-dessous du niveau prédéterminé des particules de la matière présentes ou circulant dans le récipient (1) ou au-dessous du niveau du tourbillon formé par le mouvement ou la rotation des particules de la matière, les moyens d'alimentation en gaz (50) étant notamment disposés dans le tiers le plus bas de la hauteur du récipient (1),

10. Dispositif selon l'une des revendications 4 à 9, **caractérisé en ce que** les moyens d'alimentation en gaz (50) sont disposés dans la paroi latérale (2) ou aboutissent à la partie inférieure (10) de l'intérieur entre au moins deux disques support (9, 29) ou outils de mélange et de broyage (12, 21) superposés ou entre un disque support supérieur et un disque support inférieur ou des outils de mélange et de broyage supérieurs et des outils de mélange et de broyage inférieurs, de préférence entre les outils de mélange et de broyage (21) supérieurs ou le disque support (9) supérieur et les outils de mélange et de broyage (12) inférieurs ou le disque support (29) inférieur, les moyens d'alimentation en gaz (50) étant disposé ou aboutissant, de préférence, entre deux disques support ou deux outils de mélange et de broyage, notamment centralement.

11. Dispositif selon l'une des revendications 4 à 10, **caractérisé en ce que** les moyens d'alimentation en gaz (50) sont disposés dans la paroi latérale (2) à la même hauteur autour de la circonférence entière de la paroi intérieure du récipient (1) et sont, de préférence, uniformément répartis,
et/ou
**en ce que** les moyens d'alimentation en gaz (50) sont formés dans la paroi latérale (2) comme une fissure annulaire s'étendant le long de la circonférence, notamment le long la circonférence entière.

12. Dispositif selon l'une des revendications 4 à 11, **caractérisé en ce qu'**au moins un, de préférence plusieurs ailes de transport (65) sont formées sur la face inférieure, orientée vers la surface de fond (3), d'un disque support (29) inférieur, éventuellement aussi sur les faces inférieures de disques support (29) éventuels, s'étendant radialement et éventuellement en forme courbée, lesdites ailes de transport (65) générant un courant de matière et de gaz de l'endroit au-dessous le disque support (29) inférieur vers le haut, notamment à travers de la fissure annulaire (11) et/ou les passages (36), vers l'endroit au-dessus du disque support (29) inférieur.

13. Dispositif selon l'une des revendications 4 à 12, **caractérisé en ce que** les moyens d'évacuation de gaz (51) sont disposés dans un endroit éloigné de la surface de fond (3) du récipient ou de la matière et du tourbillon, notamment dans le couvercle du récipient,
et/ou **en ce qu'**au moins une installation de mesure (56), pressurisée par le gaz évacué, notamment en aval des moyens d'évacuation de gaz (51), pour mesurer la température et/ou, éventuellement, l'humidité ou la teneur en substances interférentes dans le gaz évacué du récipient par les moyens d'évacuation de gaz (51),
et/ou
**en ce qu'**une installation de commande (58) est fournie qui est reliée à l'installation de chauffage (54) et/ou l'installation de séchage (55) et/ou l'installation de pompage ou l'installation soufflante (52) et/ou l'installation d'aspiration (53), si une de celles-ci est présente, et éventuellement règle celles-ci sur la base de paramètres pré-déterminés concernant la matière et/ou de la température du gaz évacué et/ou du type des substances interférentes.
